# EUROPEAN PATENT SPECIFICATION

(11) **EP 2 746 074 B1**
(45) Date of publication and mention of the grant of the patent: **04.11.2015**
(21) Application number: 13197324.0
(22) Date of filing: 16.12.2013
(51) Int. Cl.: B60C 19/00, B60C 23/12, B29D 30/00

(54) **Pneumatic tire with built in fastener system**
Luftreifen mit eingebautem Befestigungssystem
Pneumatique doté d'un système de fixation intégré

(30) Priority: 20.12.2012 US 201261740154 P; 11.03.2013 US 201313792796
(43) Date of publication of application: 25.06.2014
(73) Proprietor: The Goodyear Tire & Rubber Company, Akron, Ohio 44316 (US)
(72) Inventor: Hinque, Daniel Paul Luc Marie, B-6720 Habay-la-Neuve (BE); Peronnet-Paquin, Anne Therese, L-2566 Luxembourg (LU); Bonnet, Gilles, L-9176 Niederfeulen (LU); Piret, Gauthier, B-4970 Ster-Francorchamps (BE); Talbot, William Alain, 6600 Bastogne (BE); Koster, Georges, L-8436 Steinfort (LU)
(74) Representative: Kutsch, Bernd

(56) References cited:
- EP-A1- 1 721 760
- EP-A2- 2 565 059
- WO-A2-2014/030075
- JP-A- 2006 044 503
- US-A1- 2004 118 196
- US-A1- 2011 259 496

## Description

### Field of the Invention

The invention relates generally to tires and securing parts to a pneumatic tire.

### Background of the Invention

Structures in a pneumatic tire may require the attaching or securing of certain parts, functional devices, and connectors to a rubber part of the tire (e.g., the innerliner). In particular, the structures of an air maintenance tire typically include components such as pressure regulating valves, check valves, tubing or bridge connectors and filters to be attached to the tire sidewall within the tire cavity. Such structures typically encounter high stresses during the operating conditions of the tire. Thus, strong attachment of such structures is desired for proper operation of the system as a whole.

WO-A- 2004/030075, which has been published only after the effective filing date of this application, describes a self-inflating inner tube for a tire with a non-elastic perimeter band.

US-A- 2004/118196 describes a tire having a patch attached to the inner side of the tire under the tire tread. The patch has an internally threaded nut embedded therein and is affixed to the inner liner of the tire. A tag may be screwed into the threaded nut for affixing the tag to the tire.

EP-A- 2 565 059 describes a self-inflating pneumatic tire assembly comprising an air passageway integrated into the tire, and an inlet regulator device.

EP-A- 1 721 760 describes an electronic device fixing system for a pneumatic tire.

### Summary of the Invention

The invention relates to a tire assembly in accordance with claim 1 and to a method in accordance with claim 10.

Dependent claims refer to preferred embodiments of the invention.

The invention provides in a first aspect a tire comprising: an interior surface, wherein a receptacle is mounted on the interior surface of the tire, the receptacle having a raised hump formed on the interior surface, and having a mechanical fastener system formed within the raised hump.

The invention provides in a second aspect a method of securing an object to a tire, including the steps of: attaching two or more concentric layers of elastomeric material to a green tire; inserting a first part of a mechanical fastener system into a hole of the two or more concentric layers; curing the green tire to form a cured tire and to secure the first part of the two piece mechanical fastening system to the cured tire; attaching the object to a second part of the two piece mechanical fastening system; and attaching the first part of the two-piece mechanical fastening system to the second part of the two-piece mechanical fastening system.

The invention provides in a third aspect a method of securing an object to a tire, including the steps of: attaching two or more concentric layers of elastomeric material to a green tire; molding a first part of a mechanical fastener system into a hole of the two or more concentric layers; curing the green tire to form a cured tire; attaching the object to a second part of the two piece mechanical fastening system; and attaching the first part of the two-piece mechanical fastening system to the molded in second part of the two-piece mechanical fastening system.

The invention provides in a fourth aspect a tire assembly comprising a tire having a toroidal tire cavity for containing pressurized air; an elongate integral air passageway contained within a flexible tire component, the air passageway extending between an air inlet cavity and an air outlet cavity in the flexible tire component, the air passageway extending for at least a partial circumferential path around the tire; and a receptacle mounted on the interior surface of the tire, the receptacle has a first part of a two part fastener system, wherein the receptacle has a passageway in fluid communication with the air passageway within the flexible tire component.

### Definitions

"Axial" and "axially" means lines or directions that are parallel to the axis of rotation of the tire.

"Chafer" is a narrow strip of material placed around the outside of a tire bead to protect the cord plies from wearing and cutting against the rim and distribute the flexing above the rim.

"Footprint" means the contact patch or area of contact of the tire tread with a flat surface at zero speed and under normal load and pressure.

"Lateral" means an axial direction.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
Figure 1 illustrates a partial inside view of a tire in the sidewall region showing two threaded receptacles of the present invention.
Figure 2 illustrates an assembly 112 of concentric rings 114a-g used to form the raised humps 108 of the threaded receptacles of Figure 1.
Figure 3 illustrates the assembly placed in a green tire sidewall area.
Figure 4 illustrates a close-up view of the molded threaded passageway formed in the threaded receptacles 108, 109 post cure.
Figure 5 illustrates a tire assembly with air maintenance pump assembly.

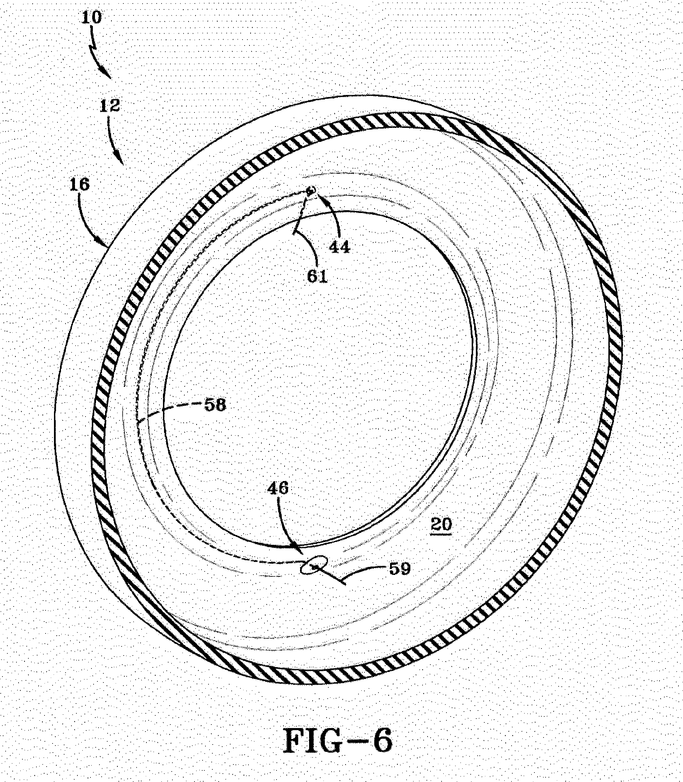

Figure 6 illustrates a green tire sidewall during the installation of the pump.
Figure 7 illustrates a cross-sectional view of a portion of a tire bead area showing the pump tube location.

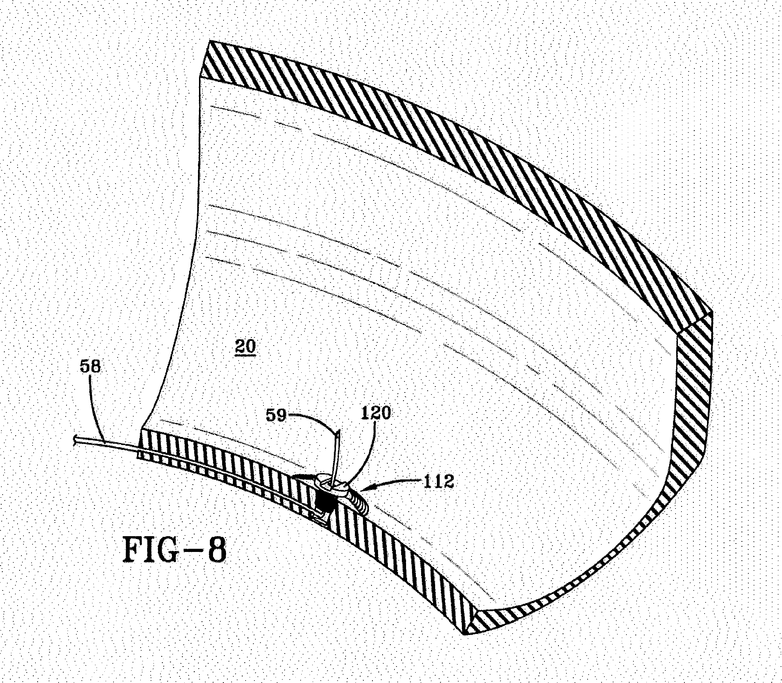

Figure 8 illustrates a schematic of the concentric ring assembly mounted on the tire, prior to cure, shown with a screw inserted therein and a strip extending from the tire sidewall to the hole of the concentric ring assembly.
Figure 9 illustrates a front view of alternate embodiment of the invention.
Figure 10 illustrates a front view of a second alternate embodiment of the invention.
Figure 11 is a perspective view of a third alternate embodiment.

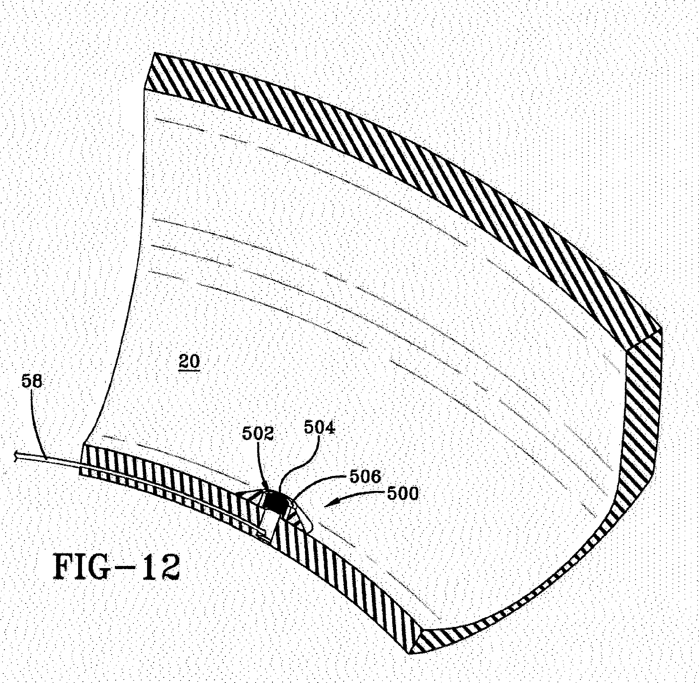

Figure 12 is a cross-sectional view of Figure 11.

### Detailed Description of Examples of the Present Invention

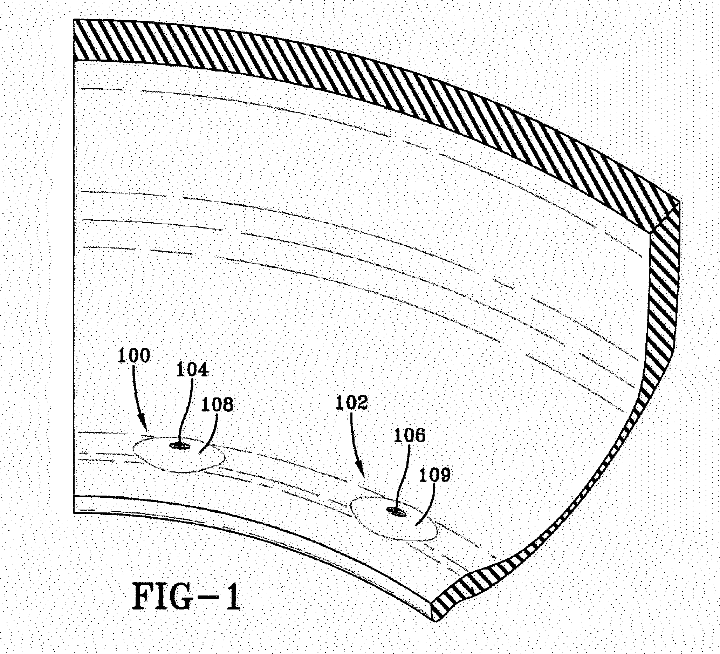

Figure 1 illustrates a partial inside view of a tire in the sidewall region which illustrates a first and second raised receptacle 100, 102 of the present invention. The raised receptacles 100, 102 are preferably integrally molded with the green tire during vulcanization, and include a raised surface or hump 108, 109 formed on the interior surface of the tire. While the receptacles are shown in the tire sidewall area, the receptacles may be located anywhere on the inside or exterior surface of the tire.

Each raised hump 108, 109 includes a first part of a fastener mechanism which is preferably centrally located. In this example, the first part of a fastener mechanism is a threaded hole 104, 106. Devices such as valves, transducers, filters or other devices have a second part of a fastener system which in this example is a threaded male end, may be secured or screwed into the receptacle as described in more detail, below. The raised receptacle is not limited to a threaded hole, and may include other locking fastener systems known to those skilled in the art. For example, the first part of a fastener mechanism may be a bayonet-style socket that is inserted into the assembly and molded into the tire. The device to be mounted may include the second part of the fastener system which is a bayonet connector for reception into mating engagement with the bayonet socket. Other fastener systems may include snap in fastener, key, spline joint, or retaining ring. Velcro (hook and loop strip) may also be used as the fastener system.

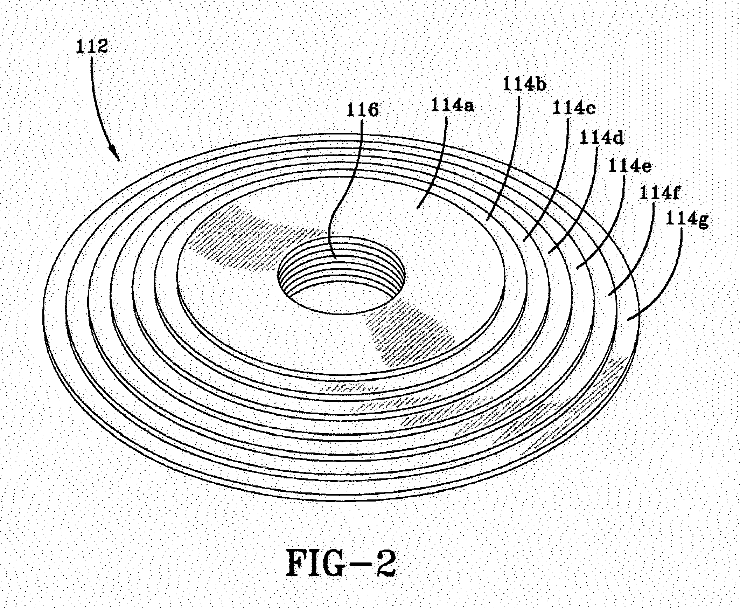

Figure 2 illustrates an assembly 112 of concentric stacked layers 114a-g used to form the humps 108 of the present invention. While the invention is illustrated as concentric rings, the invention is not limited to the ring shape, as other shapes such as squares, triangles; etc would work for the invention. The assembly 112 is formed of concentric layers of material, wherein the material may be: green rubber or uncured elastomeric or thermoplastic materials or blends thereof. The rubber may be reinforced with short fibers or fabric reinforcements. Preferably, the layers are formed of a green hard rubber compound having a Shore A hardness in the range of 40 to 100, and more preferably in the range of 50 to 90 or 60 to 80. Each layer 114a-g has an aligned interior hole 116 having the same interior diameter as the other layers 114a-g. Starting with the innermost layer 114g with the largest outer dimension, the layers 114a-f are arranged in a pyramid with layers of decreasing outer dimensions such that the outermost layer 114a has the smallest outer diameter.

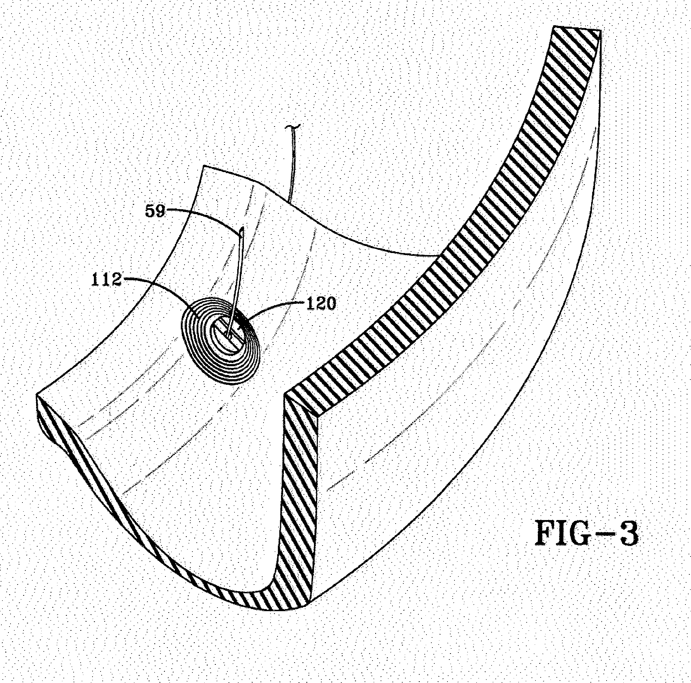

The layers forming the assembly 112 are assembled as shown in Figure 2 and then placed inside a green tire adjacent the innerliner, as shown in Figure 3. For an application such as a peristaltic pump assembly, the assembly 112 may be placed in the sidewall area near the chafer. The assembly 112 is temporarily secured to the innerliner using hot gum rubber or rubber adhesive. A screw such as an M5 screw 120 is inserted into hole 116 of the assembly and may be secured using rubber adhesive. The hole diameter 116 is preferably sized so that the hole sidewalls abut the screw surface.

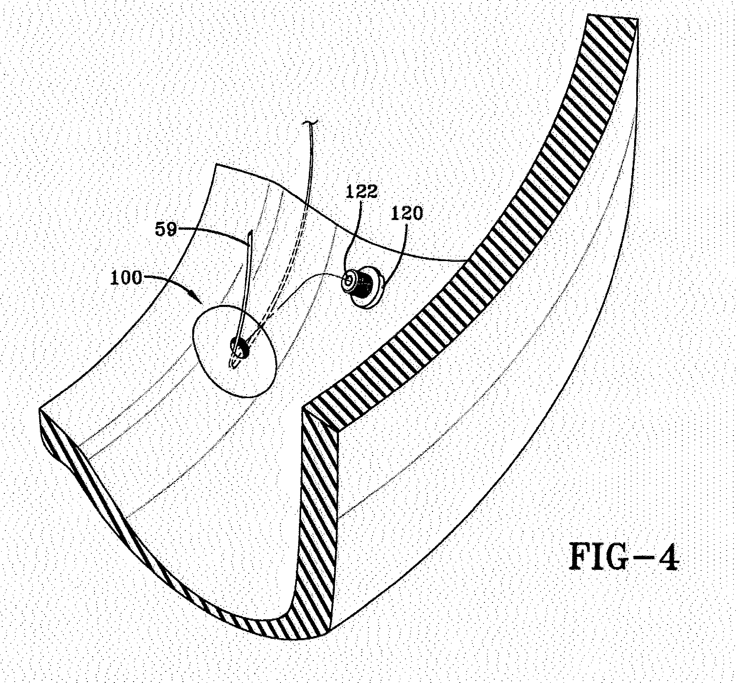

The green tire is then vulcanized in a tire mold as known to those skilled in the art. After the tire has been vulcanized, the concentric assembly has been vulcanized to form the humps 108, 109 which are integrally bonded to the tire inner surface. Figure 4 illustrates that the threads of the screw 120 has formed a threaded passageway molded in the cured tire after removal of screw 120.

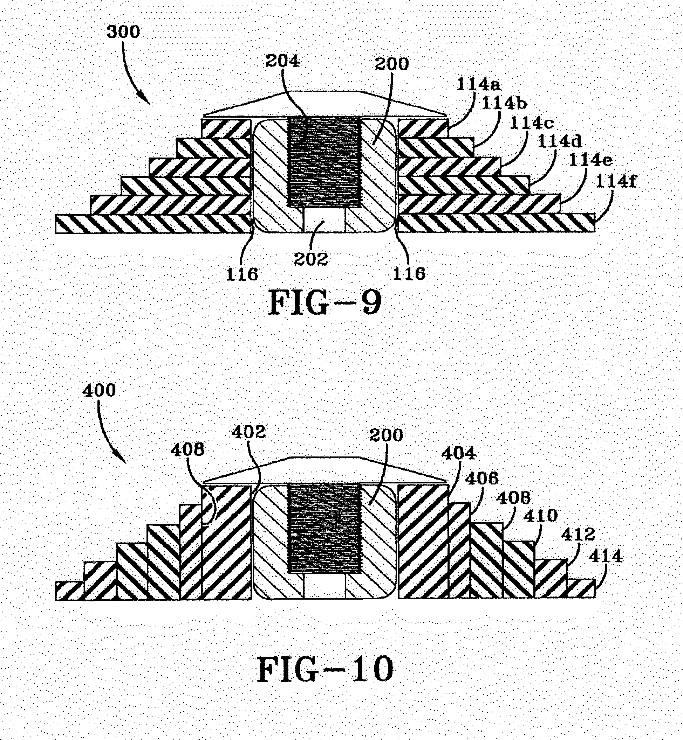

As shown in Figure 9, the concentric layer assembly 112 may be used in conjunction with an insert 200 forming an assembly 300 which is a first part of a fastener system. The insert 200 may be a cylindrically shaped sleeve having an internal hole 202 (or other fastener mechanism (not shown)). Hole 202 extends completely through the insert 200. The insert 200 is inserted in hole 116 of assembly 112 prior to cure. The insert 200 internal hole 202 preferably is partially threaded 204 to receive a second part of a fastener system such as a threaded end of a valve or other device. The assembly 300 is then affixed to a desired green tire surface such as the internal portion of the sidewall using adhesive. A removable screw is preferably screwed into hole 116 prior to cure. The assembly 300 is permanently molded into the tire with the exception of the removable screw during vulcanization.

The insert 200 may be made of rubber, preferably green rubber, elastomer, metal, plastic, nylon or ultra high molecular weight polyethylene (UHMWPE) or other known material or combinations thereof. The insert may optionally include threads or protrusions on the exterior surface. The insert may further include a flanged outer end (not shown) in order to secure the insert to the tire. The outer surface of the insert may optionally be roughened and coated with a suitable adhesive such as resorcinol formaldehyde latex (RFL) commonly known as "dip". The outer surface of the insert may further include ridges, flanges, extensions, threads or other mechanical means in addition to the selected RFL to retain it into the rubber of the tire sidewall.

A third embodiment of an assembly 400 is shown in Figure 10. The assembly includes a plurality of annular rings 404 through 414 wherein each ring has an inner hole which encircles another ring. Thus ring 414 encircles the outer surface of ring 412, and ring 412 has an inner hole which encircles ring 410 and so on. Each ring may have a height H. Preferably the inner most ring 404 is the tallest ring, and the outermost ring is the shortest. The rings are arranged such that the tallest rings are innermost and successively decrease in height towards the outermost ring. The assembly includes an optional insert 200 as described above. The insert is mounted in hole 402 of annular ring 404. Annular rings 404 and 406 are preferably made of a hard rubber such as known to those skilled in the art to form an apex. Rings 408 and 410 are preferably formed of a hard rubber such as a chafer. Rings 412 and 414 are preferably formed of a rubber used to make ply. Thus the innermost rings 404, 406 are formed of a green hard rubber compound having a Shore A hardness in the range of about 40 to about 100, and more preferably in the range of about 50 to about 90.

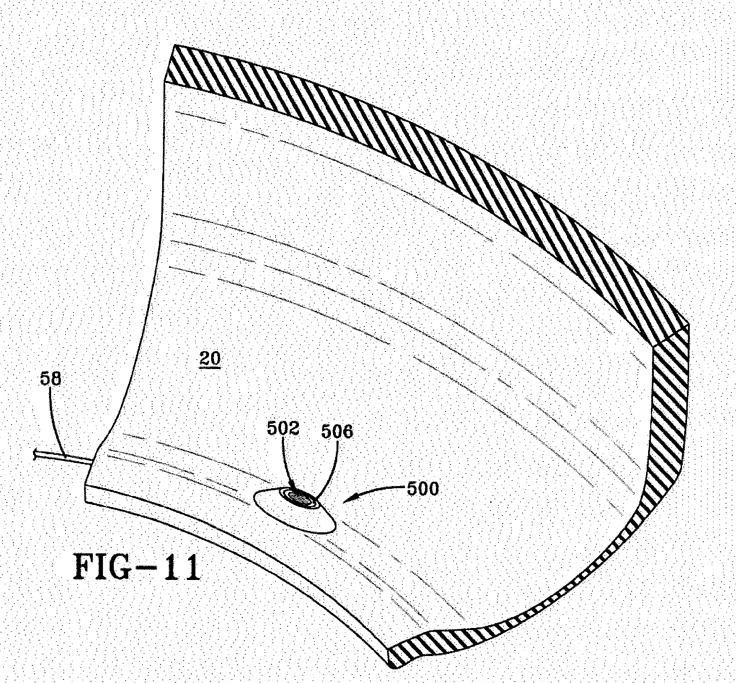

Alternatively, in place of the concentric layered assembly 112, a one piece unit 500 having a pyramidal shape as shown in Figure 11 may be used. The one piece unit may be premolded to a desired shape such as a pyramid. The one piece unit has a center hole 502 which may be threaded 504. A removable screw may be placed in center hole 502 and used to mold in threads when the assembly 500 is vulcanized in the tire. The one piece unit may optionally include a center sleeve 506 which may be made of a different material than the one piece unit. In place of the screw, a mold to form the shape of the desired fastener may be used, or the fastener device itself may be permanently molded into the tire by insertion prior to cure. The assembly 500 is permanently molded into the tire by affixing to a desired green tire surface such as the internal portion of the sidewall using adhesive. A removable screw is preferably screwed into hole 502 prior to cure. The assembly 500 is permanently molded into the tire with the exception of the removable screw.

The center sleeve may be made of rubber, preferably green rubber, elastomer, metal, plastic, nylon or ultra high molecular weight polyethylene (UHMWPE) or other known material or combinations thereof. The sleeve may optionally include threads or protrusions on the exterior surface. The sleeve may further include a flanged outer end (not shown) in order to secure the sleeve to the tire. The outer surface of the sleeve may optionally be roughened and coated with the selected RFL. The outer surface of the sleeve may further include ridges, flanges, extensions, threads or other mechanical means in addition to the selected RFL to retain it into the rubber of the tire sidewall.

### Embodiment with Peristaltic Pump Assembly

The following method steps are applicable for the installation of the threaded receptacle 100 to be used in conjunction with the special case of a tire with a peristaltic pump assembly. The receptacles may be used to install pressure regulators, valves, filter and combinations thereof. Thus, the threaded receptacles must be installed in such a manner so that the devices installed in the receptacles are in fluid communication with the pump fluid passageway in the tire.

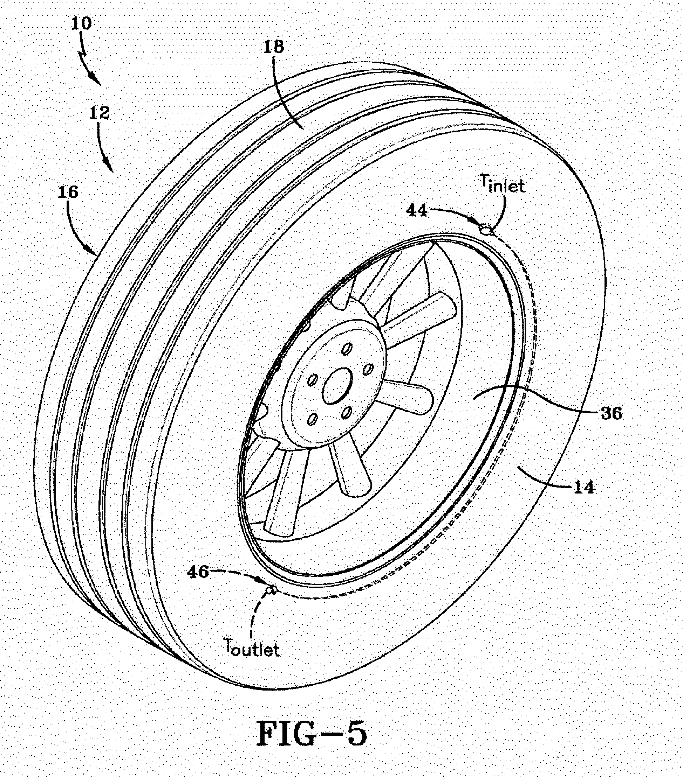

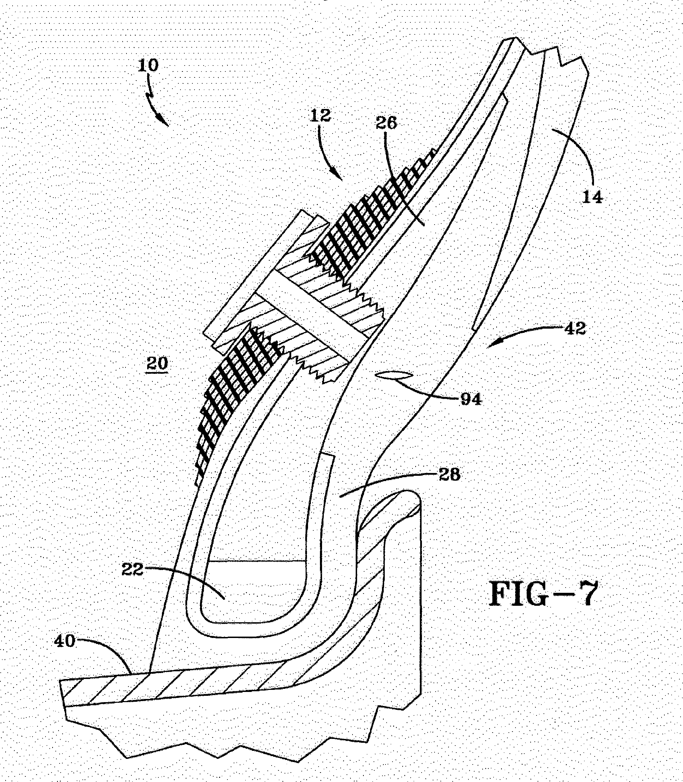

Referring initially to FIG. 5, a tire having an air maintenance assembly system 10 is shown provided within one (FIG. 7) or both (not shown) sidewalls 14, 16 of the tire 12. The tire also has a tread 18, as bead 22 and an apex 26. It may be mounted on a rim 36 having a rim surface 40. The air maintenance assembly 42 may be configured to extend between an air entry or inlet cavity 44 and an air exit or outlet cavity 46 within the sidewall 14, 16. The air maintenance assembly 42 may incorporate a thin hollow tube 94 within a flexible tire component, such as the chafer 28, wherein the tube is formed during tire construction with a strip, which is them removed post cure to form the tube 94. The location selected for the hollow tube or passageway within the tire 12 may be within a tire component residing within a high flex region of the tire, sufficient to progressively collapse the peristaltic internal hollow tube as the tire rotates under load thereby conveying air along the hollow tube from the inlet cavity 44 to the outlet cavity 46 and the tire cavity 20. This AMT (Air Maintenance Tire) assembly 42 may thus function as an internal peristaltic air pump for the tire 12. The pump is shown as a 180 degree configuration, but could be any desired configuration such as 90 degrees, 270, 360.

A flexible green (uncured) tire component such as a chafer 28, may have a groove formed therein wherein the groove has opposed groove walls. A silicone strip, cable, or wire (hereinafter strip) 58 is placed in the groove between the groove walls, and then the walls stitched closed. The strip may optionally be encased in green rubber prior to placement within the tire component groove. The chafer or tire component with the strip is installed in the tire during the tire building process. Holes are punched in the green tire at the location of the inlet 44 and outlet 46. The strip 58 is preferably dimensioned such that the ends 59, 61 extend a distance beyond the inlet/outlet holes 44, 46 at opposite ends of the chafer strip.

A concentric assembly 112 is positioned at the location of the punched holes 44, 46 on the inside surface of the tire. A first end 59 of the strip is positioned so that it extends through inlet punched hole 46 on the interior surface of the tire, and through hole 116 of concentric ring assembly 112. The threaded end of a screw or other fastener system is positioned in hole 116, wherein the strip end 59 is inserted through a central hole of the screw or fastener system. Figure 3 illustrates the assembled configuration pre-cure. The procedure is repeated for outlet punched hole 44. It is important that the strip be threaded through each hole 44, 46 and through the central hole 122 of screw 120 in order to form a continuous molded in passageway from each of the threaded receptacles to the pump tube 94. After the tire is cured, the strip is removed forming a continuous air passageway 94 from the threaded receptacle at the inlet end 46, through the interior of the tire sidewall, and to the threaded receptacle at the outlet. Preferably, an inlet control or pressure regulator valve (not shown) having a male threaded end is threadably received in the inlet end receptacle. The inlet control valve controls the air flow into the pump. It is also preferred that a check valve having a male threaded end (not shown) is screwed into the receptacle located at the pump outlet end. The check valve is in fluid communication with the tire cavity so that fluid may flow into the tire cavity to maintain the tire pressure at a desired pressure, while preventing cavity air from back flowing into the pump. This continuous air passageway ensures that upon installation of a valve or filter into the threaded receptacle, that the valve, filter or other component is in fluid communication with the pump passageway.

As described above, the air maintenance assembly 42 may represent a peristaltic air pump system in which the compressible air passageway progressively pumps air along the passageway from the inlet to the outlet and the tire cavity 20 for maintaining internal tire cavity pressure at a required level. The inlet and the outlet may be positioned in the range of about 90 to 360 degrees apart, separated by the internal air passageway. The tire 12 may rotate in a direction of rotation and cause a footprint to be formed against the contact/ground surface. A compressive force may be directed into the tire 12 from the footprint and may act to flatten a segment of the air passageway adjacent the footprint. Flattening of the segment of the passageway may force air from the segment along the internal passageway in a direction toward the pump outlet.

The sequential flattening of the air passageway segment by segment may thus cause evacuated air from the flattened segments to be pumped to the pump outlet. When the air flow pressure is sufficient against the permanent outlet assembly, the outlet assembly may open to allow air to flow through the outlet assembly into the tire cavity 20. This air may thereby serve to re-inflate the tire 12 to a desired pressure level as needed.

With the tire 12 continuing to rotate, flattened tube segments may be sequentially refilled by air flowing into the inlet assembly along the passageway. The inflow of air from the inlet may continue until the outlet becomes adjacent the tire footprint. When the tire 12 rotates further, the inlet will eventually pass the tire footprint against ground surface, and airflow may resume to the outlet along the passageway.

The above-described cycle may then be repeated for each tire revolution, "half" depending on the pump length of each rotation resulting in pumped air going to the tire cavity 20 and "half" depending on the pump length of the rotation resulting in pumped air being directed back out the inlet. It will be appreciated that the subject tire assembly and its peristaltic pump assembly 42 may function in like manner in either direction of rotation. The peristaltic pump assembly 42 is accordingly bi-directional and equally functional with the assembly moving in a forward or an opposite, reverse direction of rotation.

## Claims

1. A tire assembly comprising a tire (12) having a toroidal tire cavity (20) for containing pressurized air and an elongate integral air passageway (94) contained within a flexible tire component such as a tire chafer (28), the air passageway (94) extending between an air inlet cavity (44) and an air outlet cavity (46) in the flexible tire component and extending for at least a partial circumferential path around the tire (12), and at least one receptacle (100, 102) mounted on a surface, preferably an interior surface, of the tire (12), wherein the receptacle (100, 102) has a first part of a two part fastener system, and has a passageway (104, 106) in fluid communication with the air passageway (94) within the flexible tire component, wherein the receptacle (100, 102) has a raised hump (108, 109) formed on the interior surface, and the first part is formed within the raised hump (108, 109).

2. The tire assembly of claim 1 wherein the receptacle (100, 102) is in fluid communication within the tire cavity (20).

3. The tire assembly of at least one of the previous claims wherein a device having a second part of a two part fastener system is secured within the receptacle (100, 102).

4. The tire assembly of at least one of the previous claims wherein the device is a filter having a threaded end that is screwed into the receptacle (100, 102).

5. The tire assembly of at least one of the previous claims wherein the receptacle (100, 102) is raised from the surface of the tire (12) forming a hump (108, 109).

6. The tire assembly of at least one of the previous claims wherein the receptacle (100, 102) comprises a metal sleeve having a threaded internal passageway.

7. The tire assembly of at least one of the previous claims wherein the first part of the two part fastener system is a bayonet socket and the second part is a bayonet.

8. The tire assembly of at least one of the previous claims wherein the first part of the two part fastener system is a threaded passageway or hole (104, 106), a bayonet socket, a snap in fastener, a key, a spline joint, a retaining ring, a hook and loop strip or an insert; and/or wherein the first part of the two part fastener system is made of nylon, brass, metal, plastic or an ultra high molecular weight polyethylene.

9. The tire assembly of at least one of the previous claims wherein the first part of fastener system is molded into tire.

10. A method of securing an object to a tire or a tire assembly, the method including the steps of: attaching two or more concentric layers (402, 404, 406, 410, 412, 414) of elastomeric material to a green tire; inserting or molding a first part of a mechanical fastener system into a hole (116) of the two or more concentric layers; curing the green tire to form a cured tire (12); attaching the object to a second part of the two piece mechanical fastening system; and attaching the first part of the two-piece mechanical fastening system to the second part of the two-piece mechanical fastening system.

11. The method of claim 10 wherein the step of curing the green tire to form the cured tire (12) comprises securing the first part of the two piece mechanical fastening system to the cured tire (12); and/or wherein the step of attaching the first part of the two-piece mechanical fastening system to the second part of the two-piece mechanical fastening system comprises attaching the first part of the two-piece mechanical fastening system to the molded in second part of the two-piece mechanical fastening system.

## Patentansprüche

1. Reifenanordnung, umfassend einen Reifen (12) mit einem toroidförmigen Reifenhohlraum (20) zum Enthalten druckbeaufschlagter Luft und einem in einem flexiblen Reifenbauteil, wie etwa einem Reifenwulstschutzstreifen (28), enthaltenen länglichen integralen Luftkanal (94), wobei der Luftkanal (94) sich zwischen einem Lufteinlasshohlraum (44) und einem Luftauslasshohlraum (46) in dem flexiblen Reifenbauteil erstreckt und sich für mindestens einen teilweisen umfangsgerichteten Pfad um den Reifen (12) erstreckt, und mindestens einen an einer Oberfläche, bevorzugt einer inneren Oberfläche, des Reifens (12) montierten Aufnahmebehälter (100, 102), wobei der Aufnahmebehälter (100, 102) einen ersten Teil eines zweiteiligen Befestigungssystems aufweist und einen Durchgang (104, 106) in Fluidverbindung mit dem Luftkanal (94) in dem flexiblen Reifenbauteil aufweist, wobei der Aufnahmebehälter (100, 102) einen an der inneren Oberfläche gebildeten erhabenen Höcker (108, 109) aufweist und der erste Teil in dem erhabenen Höcker (108, 109) gebildet ist.

2. Reifenanordnung nach Anspruch 1, wobei der Aufnahmebehälter (100, 102) in Fluidverbindung mit dem Reifenhohlraum (20) steht.

3. Reifenanordnung nach mindestens einem der vorhergehenden Ansprüche, wobei eine Vorrichtung, die einen zweiten Teil eines zweiteiligen Befestigungssystems aufweist, in dem Aufnahmebehälter (100, 102) gesichert ist.

4. Reifenanordnung nach mindestens einem der vorhergehenden Ansprüche, wobei die Vorrichtung ein Filter ist, der ein mit Gewinde versehenes Ende aufweist, das in den Aufnahmebehälter (100, 102) geschraubt ist.

5. Reifenanordnung nach mindestens einem der vorhergehenden Ansprüche, wobei der Aufnahmebehälter (100, 102) von der Oberfläche des Reifens (12) erhaben ist, wobei er einen Höcker (108, 109) bildet.

6. Reifenanordnung nach mindestens einem der vorhergehenden Ansprüche, wobei der Aufnahmebehälter (100, 102) eine Metallhülse umfasst, die einen mit Gewinde versehenen inneren Durchgang aufweist.

7. Reifenanordnung nach mindestens einem der vorhergehenden Ansprüche, wobei der erste Teil des zweiteiligen Befestigungssystems ein Bajonettsockel ist und der zweite Teil ein Bajonett ist.

8. Reifenanordnung nach mindestens einem der vorhergehenden Ansprüche, wobei der erste Teil des zweiteiligen Befestigungssystems ein mit Gewinde versehener Durchgang oder Loch (104, 106), ein Bajonettsockel, ein Schnappverschluss, eine Passfeder, eine Kerbverzahnung, ein Haltering, ein Klettstreifen oder ein Einsatz ist; und/oder wobei der erste Teil des zweiteiligen Befestigungssystems aus Nylon, Messing, Metall, Kunststoff oder einem Polyethylen mit ultrahoher Molmasse hergestellt ist.

9. Reifenanordnung nach mindestens einem der vorhergehenden Ansprüche, wobei der erste Teil des Befestigungssystems in den Reifen eingeformt ist.

10. Verfahren zum Sichern eines Gegenstandes an einem Reifen oder einer Reifenanordnung, wobei das Verfahren die Schritte beinhaltet des: Befestigens von zwei oder mehr konzentrischen Lagen (402, 404, 406, 410, 412, 414) von Elastomermaterial an einem Reifenrohling; Einsetzens oder Einformens eines ersten Teils eines mechanischen Befestigungssystems in ein Loch (116) der zwei oder mehr konzentrischen Lagen; Vulkanisierens des Reifenrohlings, um einen vulkanisierten Reifen (12) zu bilden; Befestigens des Gegenstandes an einem zweiten Teil des zweiteiligen mechanischen Befestigungssystems; und Befestigens des ersten Teils des zweiteiligen mechanischen Befestigungssystems an dem zweiten Teil des zweiteiligen mechanischen Befestigungssystems.

11. Verfahren nach Anspruch 10, wobei der Schritt des Vulkanisierens des Reifenrohlings zur Bildung des vulkanisierten Reifens (12) das Sichern des ersten Teils des zweiteiligen mechanischen Befestigungssystems an dem vulkanisierten Reifen (12) umfasst; und/oder wobei der Schritt des Befestigens des ersten Teils des zweiteiligen mechanischen Befestigungssystems an dem zweiten Teil des zweiteiligen mechanischen Befestigungssystems das Befestigen des ersten Teils des zweiteiligen mechanischen Befestigungssystems an dem eingeformten zweiten Teil des zweiteiligen mechanischen Befestigungssystems umfasst.

## Revendications

1. Assemblage de bandage pneumatique comprenant un bandage pneumatique (12) possédant une cavité toroïdale de bandage pneumatique (20), destinée à contenir de l'air sous pression, et un passage solidaire allongé pour l'air (94) contenu dans un composant flexible du bandage pneumatique tel qu'une bandelette talon de bandage pneumatique (28), le passage pour l'air (94) s'étendant entre une cavité d'entrée pour l'air (44) et une cavité de sortie pour l'air (46) dans le composant flexible du bandage pneumatique et s'étendant sur une voie circonférentielle au moins partielle autour du bandage pneumatique (12), et au moins un récipient (100, 102) monté sur une surface, de préférence sur la surface interne du bandage pneumatique (12), dans lequel le récipient (100, 102) possède une première partie d'un système de fixation en deux parties et possède un passage (104, 106) mis en communication par fluide avec le passage pour l'air (94) au sein du composant flexible du bandage pneumatique, dans lequel le récipient (100, 102) possède une bosse surélevée (108, 109) formée sur sa surface interne, et la première partie est réalisée au sein de la bosse surélevée (108, 109).

2. Assemblage de bandage pneumatique selon la revendication 1, dans lequel le récipient (100, 102) est mis en communication par fluide au sein de la cavité (20) du bandage pneumatique.

3. Assemblage de bandage pneumatique selon au moins une des revendications précédentes, dans lequel un dispositif possédant une deuxième partie d'un système de fixation en deux parties est fixé au sein du récipient (100, 102).

4. Assemblage de bandage pneumatique selon au moins une des revendications précédentes, dans lequel le dispositif est un filtre possédant une extrémité filetée qui est vissée dans le récipient (100, 102).

5. Assemblage de bandage pneumatique selon au moins une des revendications précédentes, dans lequel le récipient (100, 102) est surélevé par rapport à la surface du bandage pneumatique (12) en formant une bosse (108, 109).

6. Assemblage de bandage pneumatique selon au moins une des revendications précédentes, dans lequel le récipient (100, 102) comprend un manchon en métal possédant un passage interne taraudé.

7. Assemblage de bandage pneumatique selon au moins une des revendications précédentes, dans lequel la première partie du système de fixation en deux parties est une douille à baïonnette et la deuxième partie est une baïonnette.

8. Assemblage de bandage pneumatique selon au moins une des revendications précédentes, dans lequel la première partie du système de fixation en deux parties est un trou ou un passage taraudé (104, 106), une douille à baïonnette, un dispositif de fixation à pression, une clavette, un joint à languette rapportée, un anneau d'immobilisation, une bande velcro ou un insert ; et/ou dans lequel la première partie du système de fixation en deux parties est réalisée en nylon, en laiton, en métal, en une matière plastique ou en polyéthylène possédant un poids moléculaire ultraélevé.

9. Assemblage de bandage pneumatique selon au moins une des revendications précédentes, dans lequel la première partie du système de fixation est incorporée dans le bandage pneumatique par moulage.

10. Procédé de fixation d'un objet à un bandage pneumatique ou à un assemblage de bandage pneumatique, le procédé englobant les étapes consistant à : fixer deux couches concentriques ou plus (402, 404, 406, 410, 412, 414) d'une matière élastomère à un bandage pneumatique non vulcanisé ; insérer ou introduire par moulage une première partie d'un système de fixation mécanique dans un trou (116) des deux couches concentriques ou plus ; vulcaniser le bandage pneumatique non vulcanisé pour obtenir un bandage pneumatique vulcanisé (12) ; fixer l'objet à une deuxième partie du système de fixation mécanique en deux parties ; et fixer la première partie du système de fixation mécanique en deux parties à la deuxième partie du système de fixation mécanique en deux parties.

11. Procédé selon la revendication 10, dans lequel l'étape consistant à vulcaniser le bandage pneumatique non vulcanisé pour obtenir le bandage pneumatique vulcanisé (12) comprend la fixation de la première partie du système de fixation mécanique en deux parties au bandage pneumatique vulcanisé (12) ; et/ou dans lequel l'étape consistant à fixer la première partie du système de fixation mécanique en deux parties à la deuxième partie du système de fixation mécanique en deux parties comprend la fixation de la première partie du système de fixation mécanique en deux parties à la deuxième partie moulée du système de fixation mécanique en deux parties.
